# EUROPÄISCHE PATENTSCHRIFT

(11) **EP 3 638 546 B1**
(45) Veröffentlichungstag und Bekanntmachung des Hinweises auf die Patenterteilung: **23.12.2020**
(21) Anmeldenummer: 18731407.5
(22) Anmeldetag: 12.06.2018
(51) Int. Cl.: B60R 16/02, H02G 3/30

(54) **ANORDNUNG VON KABELBÜNDELN, SCHIENENFAHRZEUG UND VERFAHREN ZUR HERSTELLUNG DER ANORDNUNG**
ARRANGEMENT OF CABLE BUNDLES, RAIL VEHICLE AND METHOD FOR PRODUCING THE ARRANGEMENT
ENSEMBLE DE FAISCEAUX DE CÂBLES, VÉHICULE FERROVIAIRE ET PROCÉDÉ DE FABRICATION DE L'ENSEMBLE

(30) Priorität: 14.06.2017 DE 102017209998
(43) Veröffentlichungstag der Anmeldung: 22.04.2020
(73) Patentinhaber: Bombardier Transportation GmbH, 10785 Berlin (DE)
(72) Erfinder: KUTTER, Steffen, 02906 Quitzdorf am See, OT Horscha (DE); SEIFERT, Daniel, 02828 Görlitz (DE)
(74) Vertreter: Ramrath, Lukas
(86) Internationale Anmeldenummer: PCT/EP2018/065502
(87) Internationale Veröffentlichungsnummer: WO 2018/229050

(56) Entgegenhaltungen:
- WO-A1-2006/082238
- WO-A1-2014/002308
- JP-U- S6 059 415
- US-A- 3 346 688
- US-A1- 2012 261 185
- US-A1- 2012 279 776
- US-B1- 9 036 323

## Beschreibung

Die Erfindung betrifft eine Anordnung mehrerer Kabelbündel, insbesondere für ein Schienenfahrzeug, ein Fahrzeug, insbesondere ein Schienenfahrzeug sowie ein Verfahren zur Herstellung einer Anordnung mehrerer Kabelbündel.

In Fahrzeugen, insbesondere in Schienenfahrzeugen, aber auch in anderen Anwendungsfällen, beispielsweise in Gebäuden, werden elektrische Leitungen verlegt, um beispielsweise Signale oder elektrische Leistung zu übertragen. Die elektrischen Leitungen können hierbei voneinander verschiedene Potentiale aufweisen sowie verschiedene Ströme leiten, die frequenzabhängig sein können. Um Funktionsstörungen bei der Signal- und/oder Leistungsübertragung durch Einkopplung von Störsignalen zu vermeiden und auch um die Aussendung von Störsignalen zu begrenzen, werden die verschiedenen elektrischen Leitungen entsprechend ihrer elektromagnetischen Verträglichkeit bewertet und gegebenenfalls räumlich getrennt voneinander verlegt. Die elektromagnetische Verträglichkeit kann hierbei z.B. in Abhängigkeit von Spannungen, Strömen bzw. übertragenen Leistungen und Schaltfrequenzen der Leitungen ermittelt werden.

Problematisch ist, dass teilweise ein nur begrenzter Bauraum zur Verfügung steht. Z.B. kann bei Schienenfahrzeugen, insbesondere bei Doppelstockfahrzeugen, nur wenig Bauraum vorhanden sein, da hier möglichst weitreichende Ausnutzung des Lichtraumprofils für den Fahrgastraum erwünscht ist. Aus diesem Grund ist eine räumliche Trennung von elektrischen Leitung verschiedener EMV-Kategorien durch einen entsprechenden Abstand, der z.B. in der DIN-EN 50343:2016 angeführt ist, nicht möglich.

Es ist bekannt, Metallprofile, die verschiedene Kabelkanäle ausbilden oder aufweisen, zu nutzen, wobei elektrische Leitungen einer EMV-Kategorie in jeweils einem Kabelkanal angeordnet werden. Die Kabelkanäle bzw. das Metallprofil kann niederohmig mit einem Referenzpotential, insbesondere einem Massepotential, verbunden sein und somit neben der Schirmungsfunktion auch eine Schutzerdung im Falle des Isolationsfehlers einer elektrischen Leitung bereitstellen. Nachteilig ist hierbei jedoch eine eingeschränkte geometrische Flexibilität sowie ein hoher Material- und Montageaufwand dieser Lösung. Aufgrund des starren Metallprofils ist auch eine Vorfertigung der elektrischen Leistungsinstallation außerhalb des späteren Installationsorts nicht oder nur mit großem Aufwand möglich.

Weiter bekannt sind auch flexible Schirmungen auf Basis elektrisch leitender Geflechtschläuche. Diese können, z.B. durch metallische Befestigungselemente, mit dem Referenzpotential verbunden werden. Weiter sind derartige Schläuche flexibel, sodass z.B. vollständig EMV-getrennte Teilkabelbäume vorgefertigt werden können. Nachteilig ist hierbei jedoch der hohe Aufwand beim Anordnen der elektrischen Leitungen in den jeweiligen Geflechtschläuchen sowie hohen Materialkosten.

Die US 2012/0279776 A1 offenbart eine Metallröhre, die elektrische Kabel abschirmt, indem die Kabel in die Metallröhre eingeführt werden. Die Metallröhre hat einen Basiskörper mit einer röhrenförmigen Form, durch den die elektrischen Kabel eingeführt werden. Weiter hat die Röhre eine Trennwand, die von einer Innenwand des Basiskörpers absteht und ein Innenvolumen des Basiskörpers aufteilt. Die Trennwand hat hierbei eine gekrümmte oder geknickte Form.

Die US 2012/261185 A1 offenbart einen Kabelbaum mit einer bevorzugten Abstrahlcharakteristik, der einen reduzierten Platzbedarf für die Kabel und eine einfache Verkabelung ermöglicht.

Es stellt sich das technische Problem, eine Anordnung von Kabelbündeln, insbesondere für ein Schienenfahrzeug, ein Fahrzeug, insbesondere ein Schienenfahrzeug, sowie ein Verfahren zur Herstellung einer solchen Anordnung zu schaffen, die einen Materialaufwand zur Herstellung der Anordnung, einen Bauraumbedarf bei der Installation im Fahrzeug sowie den Montageaufwand verringern. Die Lösung des technischen Problems ergibt sich durch die Gegenstände mit den Merkmalen der Ansprüche 1, 9 und 10. Weitere vorteilhafte Ausgestaltungen der Erfindung ergeben sich aus den Unteransprüchen.

Es ist eine Grundidee der Erfindung, ein Schirmungs-Kabelbündel zwischen zwei weiteren Kabelbündeln anzuordnen, wobei das Schirmungs-Kabelbündel abgeschirmt ist und wobei ein Durchmesser des Schirmungs-Kabelbündels größer ist als ein Durchmesser der benachbart angeordneten Rand-Kabelbündel.

Vorgeschlagen wird eine Anordnung von Kabelbündeln, insbesondere für ein Fahrzeug, weiter insbesondere für Schienenfahrzeug. Die Anordnung kann jedoch auch in anderen Fahrzeugen, z.B. Wasserfahrzeugen, Kraftfahrzeugen oder Luftfahrzeugen, verwendet werden. Die Anordnung kann hierbei einen Kabelbaum des Fahrzeugs bilden. Auch kann die Anordnung Teil einer technischen Gebäudeausrüstung bilden und somit in Gebäuden verwendet werden.

Ein Kabelbündel kann hierbei ein, insbesondere genau ein, oder mehrere Kabel umfassen. Ein Kabel kann z.B. durch eine elektrische Leitung mit einer um die elektrische Leitung angeordneten Isolierung bestehen. Dies ist jedoch nicht zwingend. Auch ist vorstellbar, dass ein Kabel als elektrischer Leiter ohne Isolierung ausgebildet ist. Weiter ist vorstellbar, dass ein Kabel als sogenanntes Leerkabel ausgebildet ist. Das Leerkabel kann hierbei insbesondere hohl sein und aus einem vorbestimmten Material, beispielsweise Isolierungsmaterial, bestehen. Ein Leerkabel kann somit insbesondere keinen elektrischen Leiter umfassen.

Es ist möglich, jedoch nicht zwingend, dass ein Kabelbündel eine Hülle zur Aufnahme der Kabel des Kabelbündels umfasst. Die Hülle kann hierbei einen Hohlraum aufweisen oder umfassen, wobei im Hohlraum die Kabel angeordnet werden können. Alternativ oder kumulativ kann ein Kabelbündel ein oder mehrere Fixierungsmittel umfassen, wobei die Kabel eines Kabelbündels mittels eines Fixierungsmittels aneinander fixiert, insbesondere aneinander festgebunden, werden können. Ein Kabelfixierungsmittel kann beispielsweise ein Kabelbinder sein. Ein Kabelbündel kann hierbei einen maximalen Durchmesser aufweisen, wobei alle Kabel des Kabelbündels in einer Querschnittsebene senkrecht zur Längsachse des Kabelbündels innerhalb einer Umrandungslinie des Kabelbündels mit dem maximalen Durchmesser, z.B. eines Kreises mit dem maximalen Durchmesser des Kabelbündels, angeordnet sind.

Die Anordnung umfasst ein erstes, ein zweites und mindestens ein weiteres Kabelbündel. Vorzugsweise umfasst die Anordnung ein erstes, ein zweites und ein drittes, jedoch kein weiteres Kabelbündel.

Weiter weist in zumindest einem Teilabschnitt der Anordnung mindestens eines der Kabelbündel mindestens ein EMV-Schirmelement auf. Erfindungsgemäß weisen nicht alle Kabelbündel in diesem Teilabschnitt jeweils ein Schirmungselement auf. Der Teilabschnitt kann einen Teilabschnitt entlang des Verlaufs der Anordnung bezeichnen. Selbstverständlich kann auch entlang des gesamten Verlaufs der Anordnung eines der Kabelbündel, jedoch nicht alle Kabelbündel, mindestens ein Schirmungselement aufweisen.

Ein EMV-Schirmelement bezeichnet hierbei ein Element, welches zumindest einen Teil oder Abschnitt der Kabel des Kabelbündels elektrisch und/oder magnetisch abschirmt. Insbesondere kann mittels des EMV-Schirmelements eine Abstrahlung und/oder Einstrahlung elektromagnetischer Wellen von/auf die Kabel(n) eines Kabelbündels verhindert oder verringert werden.

Weiter ist in dem zumindest einen Teilabschnitt eines der Kabelbündel zwischen zwei weiteren Kabelbündeln angeordnet, insbesondere in dem erläuterten Teilabschnitt. Dass zumindest der Kabelbündel zwischen zwei weiteren Kabelbündeln ist, kann bedeuten, dass sich eine gerade Verbindungslinie zwischen Mittellinien der weiteren Kabelbündel durch das zwischen diesen Kabelbündeln angeordnete Kabelbündel erstreckt, insbesondere in einer Querschnittsebene senkrecht zur zentralen Längsachse der Kabelbündel, weiter insbesondere in einer Querschnittsebene senkrecht zur zentralen Längsachse des Schirmungs-Kabelbündel. Die Querschnittsebene kann hierbei eine Querschnittsebene in dem Bereich des erläuterten Teilabschnitts sein.

Insbesondere kann sich die gerade Verbindungslinie auch durch einen Mittelpunkt des zwischen den weiteren Kabelbündeln angeordneten Kabelbündels erstrecken. Auch kann ein Zwischenraum zwischen den zwei weiteren Kabelbündeln als der Raumbereich definiert werden, in dem sich gerade Verbindungslinien zwischen zwei beliebigen Punkten der zwei weiteren Kabelbündel erstrecken. In diesem Fall kann das zwischen den zwei weiteren Kabelbündeln angeordnete Kabelbündel oder zumindest ein Teil davon in diesem Zwischenraum angeordnet sein.

Weiter bilden in dem Teilabschnitt das zwischen den zwei weiteren Kabelbündeln angeordnete Kabelbündel ein sogenanntes Schirmungs-Kabelbündel und die zwei weiteren Kabelbündel jeweils ein Rand-Kabelbündel. Weiter weist das Schirmungs-Kabelbündel ein EMV-Schirmungselement und einen Durchmesser, der größer ist als der Durchmesser der Rand-Kabelbündel auf. Somit ist der Durchmesser des Schirmungs-Kabelbündels sowohl größer als der Durchmesser des ersten Rand-Kabelbündels als auch größer als der Durchmesser des weiteren Rand-Kabelbündels.

Weiter kann Schirmungs-Kabelbündel derart zwischen den zwei Rand-Kabelbündeln angeordnet sein, dass jede gerade Verbindungslinie zwischen zwei beliebigen Punkten der Rand-Kabelbündel in der vorhergehend erläuterten Querschnittsebene das Schirmungs-Kabelbündel schneidet. Mit anderen Worten erstreckt sich zumindest ein Teil des Schirmungs-Kabelbündels durch den gesamten Zwischenraum.

Ein Rand-Kabelbündel bezeichnet somit ein Kabelbündel, welches mit einem weiteren Rand-Kabelbündel einen Zwischenraum bildet oder umfasst, wobei in dem Zwischenraum das mindestens eine Schirmungs-Kabelbündel angeordnet ist. Es ist möglich, dass in dem Zwischenraum genau ein Schirmungs-Kabelbündel angeordnet ist. Es ist aber auch möglich, dass in dem Zwischenraum mehr als ein Kabelbündel angeordnet ist, wobei mindestens eines dieser Kabelbündel ein Schirmungs-Kabelbündel ist.

So ist es z.B. möglich, dass in dem Zwischenraum zusätzlich zu dem mindestens einen Schirmungs-Kabelbündel ein oder mehr als ein ungeschirmtes Kabelbündel angeordnet ist.

Alternativ oder kumulativ ist es möglich, dass in dem Zwischenraum zusätzlich zu dem mindestens einen Schirmungs-Kabelbündel ein oder mehr als ein weiteres geschirmtes Kabelbündel angeordnet ist. In diesem Fall ist es möglich, dass in dem Zwischenraum kein ungeschirmtes Kabelbündel angeordnet ist.

Es ist aber auch möglich, dass alternativ oder kumulativ in dem Zwischenraum mehr als ein Schirmungs-Kabelbündel angeordnet ist. Auch in diesem Fall ist es möglich, dass in dem Zwischenraum kein ungeschirmtes Kabelbündel angeordnet ist.

Ein Rand-Kabelbündel kann hierbei ein in Querrichtung am äußeren Rand der vorgeschlagenen Anordnung von Kabelbündeln angeordnetes Kabelbündel sein, wobei die Querrichtung senkrecht zur zentralen Längsachse der Kabelbündel, insbesondere des Schirmungs-Kabelbündels, orientiert ist und die Längsachse des Rand-Kabelbündels oder beider Rand-Kabelbündel schneidet. Mit anderen Worten kann entlang der Querrichtung in einem Bereich, der auf der von dem Schirmungs-Kabelbündel abgewandten Seite des Rand-Kabelbündels angeordnet ist, kein weiteres Kabelbündel mehr angeordnet sein. Der Bereich kann hierbei eine vorbestimmte, aber begrenzte Länge entlang der Querrichtung aufweisen.

Dies ist aber nicht zwingend. So ist es auch möglich, dass ein Rand-Kabelbündel kein in Querrichtung am äußeren Rand der vorgeschlagenen Anordnung von Kabelbündeln angeordnetes Kabelbündel bildet. Mit anderen Worten kann entlang der Querrichtung in dem Bereich, der auf der von dem Schirmungs-Kabelbündel abgewandten Seite des Rand-Kabelbündels angeordnet ist, mindestens ein weiteres Kabelbündel angeordnet sein.

Es ist z.B. möglich, dass eine Anordnung von Kabelbündeln zwei Schirmungs-Kabelbündel umfasst, wobei mindestens ein ungeschirmtes Kabelbündel zwischen den Schirmungs-Kabelbündeln angeordnet ist, welches auch als zentrales ungeschirmtes Kabelbündel bezeichnet werden kann. Weiter kann entlang der erläuterten Querrichtung in einem Bereich, der auf der von dem zentralen ungeschirmten Kabelbündel abgewandten Seite des ersten Schirmungs-Kabelbündels angeordnet ist, mindestens ein weiteres ungeschirmtes Kabelbündel angeordnet sein, welches auch als erstes ungeschirmtes Kabelbündel bezeichnet werden kann. Weiter kann entlang der Querrichtung in einem Bereich, der auf der von dem zentralen ungeschirmten Kabelbündel abgewandten Seite des zweiten Schirmungs-Kabelbündels angeordnet ist, mindestens ein weiteres ungeschirmtes Kabelbündel angeordnet sein, welches auch als zweites ungeschirmtes Kabelbündel bezeichnet werden kann. In einem solchen Fall können sowohl das erste als auch das zentrale ungeschirmte Kabelbündel Rand-Kabelbündel bilden. Weiter können in einem solchen Fall auch sowohl das zweite als auch das zentrale ungeschirmte Kabelbündel Rand-Kabelbündel bilden.

Weiter können entweder das erste, das zweite oder mindestens ein weiteres Kabelbündel das Schirmungs-Kabelbündel bilden. Die verbleibenden Kabelbündel können dann Rand-Kabelbündel bilden. Es ist jedoch auch möglich, dass entlang eines Verlaufs der Anordnung bzw. eines Kabelbündels verschiedene Kabelbündel das Schirmungs-Kabelbündel bilden. So kann beispielsweise in einem ersten Abschnitt des Verlaufs der Anordnung ein zweites Kabelbündel das Schirmungs-Kabelbündel bilden und in einem weiteren Abschnitt das erste Kabelbündel. In diesem Fall können sich Kabelbündel entlang des Verlaufs der Anordnung kreuzen.

Umfasst die Anordnung mehr als drei Kabelbündel, so kann auch mehr als ein Kabelbündel das Schirmungs-Kabelbündel bilden. Mit anderen Worten kann das Schirmungs-Kabelbündel mehr als ein Kabelbündel umfassen. Insbesondere können in diesem Fall mindestens zwei Kabelbündel zusammengeführt werden, um das Schirmungs-Kabelbündel zu bilden.

Es ist weiter möglich, dass entlang eines Verlaufs der Anordnung bzw. eines Kabelbündels eine Zusammensetzung des Schirmungs-Kabelbündels variiert. Hierbei kann eine Anzahl von Kabelbündeln, die das Schirmungs-Kabelbündel bilden, oder die Kabelbündel, die das Schirmungs-Kabelbündel bilden, variieren.

Es ist jedoch auch möglich, dass entlang eines Verlaufs der Anordnung bzw. eines Kabelbündels verschiedene Kabel der Kabelbündel das Schirmungs-Kabelbündel bilden.

Hierdurch ergibt sich in vorteilhafter Weise eine zuverlässige Schirmung der Kabel der Kabelbündel voneinander. So sind durch das mindestens eine EMV-Schirmelement des Schirmungs-Kabelbündels zum einen die Kabel dieses Schirmungs-Kabelbündels geschirmt. Zum anderen sind auch die Kabel der Rand-Kabelbündel durch das zwischen ihnen angeordnete Schirmungs-Kabelbündel mit dem EMV-Schirmelement gegeneinander und gegenüber den Kabeln des Schirmungs-Kabelbündels geschirmt. Hierdurch ergibt sich in vorteilhafter Weise, dass Anforderungen zur elektromagnetischen Verträglichkeit (EMV) auch bei Anordnung der Kabelbündel in einem vergleichsweise kleinen Raumbereich erfüllt werden können. Da kein Metallprofil mit verschiedenen Kabelkanälen verwendet werden muss, ergibt sich auch ein vereinfachter Montageaufwand bei der Anordnung der Kabelbündel in/an dem Installationsort, beispielsweise in dem Schienenfahrzeug. Da weiter nicht zwingend alle Kabelbündel ein EMV-Schirmelement aufweisen müssen, ergibt sich in weiter vorteilhafter Weise auch eine vereinfachte Herstellung der Kabelbündel sowie eine Kosten- und Materialersparnis.

In einer bevorzugten Ausführungsform weist in dem Teilabschnitt kein Rand-Kabelbündel der beiden Rand-Kabelbündel ein EMV-Schirmungselement auf. Dies bedeutet, dass eine Abstrahlung oder Einstrahlung von elektromagnetischen Wellen von/auf Kabel dieser Kabelbünden nicht durch ein solches EMV-Schirmungselement verhindert wird oder zumindest verringert ist.

Wie vorhergehend erläutert, sorgt jedoch das EMV-Schirmelement des Schirmungs-Kabelbündels für eine ausreichende Schirmung der Kabel dieser Rand-Kabelbündel gegeneinander. Hierdurch ergibt sich in vorteilhafter Weise eine besonders material- und kostensparende Herstellung von Kabelbündeln, wobei ebenfalls ein Montageaufwand reduziert wird, da keine EMV-Schirmungselemente die beiden Rand-Kabelbündel installiert werden müssen.

In einer weiter bevorzugten Ausführungsform ist ein EMV-Schirmungselement als Schirmgeflechtschlauch ausgebildet. Der Schirmgeflechtschlauch kann hierbei elektrisch mit einem Referenzpotential, insbesondere einem Massepotential, des Installationsorts, z.B. des Fahrzeugs, verbunden werden. Weiter kann ein Kabel eines Kabelbündels in dem Schirmgeflechtschlauch, also in einem von dem Schirmgeflechtschlauch umfassten Innenvolumen, angeordnet sein. Bevorzugt ist insbesondere das EMV-Schirmelement des Schirmungs-Kabelbündels als Schirmgeflechtschlauch ausgebildet. In diesem Fall kann sich das EMV-Schirmungselement entlang des gesamten Verlaufs des Kabelbündels oder zumindest entlang eines großen Teils des Verlaufs erstrecken.

In einer weiteren Ausführungsform umfasst ein Kabelbündel jeweils mindestens ein Kabel einer vorbestimmten EMV-Kategorie, wobei verschiedene Kabelbündel Kabel verschiedener EMV-Kategorien umfassen. Kabel einer EMV-Kategorie bezeichnen hierbei Kabel, die der entsprechenden EMV-Kategorie zugeordnet sind. Verschiedene EMV-Kategorien sind beispielsweise in der DIN EN 50343:2014-09 erläutert. Insbesondere können drei EMV-Kategorien existieren, eine EMV-Kategorie A, eine EMV-Kategorie B und eine EMV-Kategorie C. Hierbei kann das Schirmungs-Kabelbündel die Kabel der EMV-Kategorie A, der EMV-Kategorie B oder EMV-Kategorie C umfassen, wobei die Rand-Kabelbündel die Kabel der verbleibenden EMV-Kategorien umfassen.

Alle am Installationsort, z.B. im Fahrzeug, zu verlegenden Kabel können einer der drei EMV-Kategorien zugeordnet sein. Hierdurch ergibt sich in vorteilhafter Weise eine wenig Bauraum beanspruchende Verlegung von Kabeln verschiedener EMV Kategorien, wobei gleichzeitig Anforderungen an die elektromagnetische Verträglichkeit erfüllt sind.

In einer weiteren Ausführungsform wird entlang eines Verlaufs der Anordnung von Kabelbündeln das Schirmungs-Kabelbündel von verschiedenen Kabelbündeln gebildet. Dies kann z.B. bedeuten, dass in einem ersten Abschnitt des Verlaufs das Schirmungs-Kabelbündel von dem ersten Kabelbündel, in einem zweiten Abschnitt des Verlaufs das Schirmungs-Kabelbündel von dem zweiten Kabelbündel und in einem weiteren Abschnitt des Verlaufs des Schirmungs-Kabelbündels von einem dritten Kabelbündel oder wieder von dem ersten Kabelbündel gebildet wird. Hierzu können sich Kabelbündel entlang des Verlaufs kreuzen.

Da es unter Umständen möglich ist, dass sich Durchmesser von Kabelbündeln entlang eines Verlaufs der Anordnung im/am Installationsort, z.B. im Fahrzeug, verändern, wird hierdurch in vorteilhafter Weise sichergestellt, dass das Kabelbündel mit dem entlang des Verlaufs größten Durchmessers jeweils zwischen den verbleibenden Kabelbündeln angeordnet wird und somit das Schirmungs-Kabelbündel bildet.

In einer weiteren Ausführungsform umfasst zumindest ein Kabelbündel der Anordnung zumindest ein Leerkabel zur Vergrößerung des Durchmessers des Kabelbündels. Ein Leerkabel kann hierbei ein Kabel ohne elektrischen Leiter bezeichnen. Insbesondere kann das Leerkabel einen Hohlraum aufweisen, durch den ein oder mehrere elektrische Leiter, jedoch auch ein oder mehrere Kabel, geführt werden können. Ein Leerkabel kann hierbei einen beliebigen Querschnitt, vorzugsweise jedoch einen runden Querschnitt, aufweisen.

Durch die zusätzliche Anordnung eines Leerkabels in einem Kabelbündel kann der Durchmesser des Kabelbündels vergrößert werden. Somit kann insbesondere das Schirmungs-Kabelbündel zumindest ein Leerkabel umfassen. Selbstverständlich kann ein Kabelbündel jedoch auch mehrere Leerkabel umfassen. Es ist weiter möglich, dass auch ein oder beide Rand-Kabelbündel ein Leerkabel umfasst, beispielsweise um nachträglich weitere Leiter oder Kabel in das Kabelbündel zu integrieren.

Es ist möglich, dass entlang eines Verlaufs eines Kabelbündels nur ein Abschnitt dieses Kabelbündels ein Leerkabel oder mehrere Leerkabel umfasst. Werden z.B. entlang des Verlaufs eines Kabelbündels ein oder mehrere Kabel aus dem Kabelbündel herausgeführt, um beispielsweise ein gewünschtes Endgerät zu kontaktieren, so kann sich ein Durchmesser des Kabelbündels verringern. Um den Durchmesser eines solchen Kabelbündels nicht kleiner als einen vorbestimmten Minimaldurchmesser werden zu lassen, kann dann ein oder können mehrere Leerkabel zu dem entsprechenden Kabelbündel hinzugefügt werden. Auch ist es möglich, dass sich Kabelbündel kreuzen, wobei z.B. aufgrund der kreuzenden Kabelbündel ein Kabelbündel mit kleinerem Durchmesser als Schirmungs-Kabelbündel zwischen den Rand-Kabelbündeln angeordnet ist. Auch in diesem Fall kann dem Schirmungs-Kabelbündel ein oder mehrere Leerkabel hinzugefügt werden, um dessen Durchmesser auf einen Durchmesser größer als der Durchmesser der Rand-Kabelbündel zu vergrößern.

Durch das Hinzufügen von Leerkabeln zu zumindest einem Abschnitt des Kabelbündels ergibt sich in vorteilhafter Weise, dass ein Durchmesser des Kabelbündels, insbesondere auch entlang dessen Verlauf, verändert werden kann.

In einer weiteren Ausführungsform umfasst zumindest ein Abschnitt des Schirmungs-Kabelbündels mindestens ein Leerkabel, wobei eine Anzahl und/oder ein Durchmesser des/der Leerkabel derart gewählt wird, dass der Durchmesser des Schirmungs-Kabelbündels größer ist als ein Durchmesser der Rand-Kabelbündel. Hierdurch ergibt sich in vorteilhafter Weise, dass gewährleistet wird, dass das Schirmungs-Kabelbündel entlang seines Verlaufs immer einen größeren Durchmesser als die Rand-Kabelbündel aufweist.

In einer weiteren Ausführungsform ist entlang eines Verlaufs eines Kabelbündels ein Leerkabel nur in einem Teilabschnitt des Kabelbündels angeordnet. Dies und entsprechende Vorteile wurden vorhergehend bereits erläutert.

Weiter vorgeschlagen wird ein Fahrzeug, insbesondere ein Schienenfahrzeug. Das Fahrzeug umfasst hierbei eine Anordnung von Kabelbündeln gemäß einer der in dieser Offenbarung beschriebenen Ausführungsformen. Insbesondere können die Kabelbündel der Anordnung in dem Bereich einer Decke des Fahrzeugs angeordnet sein. Alternativ können die Kabelbündel der Anordnung in einem Unterbodenbereich des Fahrzeugs angeordnet sein. Weist das Fahrzeug eine Hohlprofilstruktur auf, so können die Kabelbündel in Hohlräumen der Hohlprofilstrukturen angeordnet, insbesondere verlegt, werden/sein.

Hierdurch ergibt sich in vorteilhafter Weise ein Fahrzeug, für welches ein Bauraumbedarf für die Kabel in den Kabelbündeln minimiert ist. Somit steht mehr Bauraum für den Fahrgastraum zur Verfügung.

Die Anordnung von Kabelbündeln kann hierbei einen sogenannten Kabelbaum oder einen Teil davon ausbilden.

Weiter beschrieben wird ein Gebäude. Das Gebäude umfasst hierbei eine Anordnung von Kabelbündeln gemäß einer der in dieser Offenbarung beschriebenen Ausführungsformen.

Weiter vorgeschlagen wird ein Verfahren zur Herstellung einer Anordnung gemäß einer der in dieser Offenbarung beschriebenen Ausführungsformen. Hierbei wird ein erstes, ein zweites und mindestens ein weiteres Kabelbündel bereitgestellt. Weiter weist mindestens eines der Kabelbündel, jedoch nicht alle Kabelbündel, mindestens ein EMV-Schirmelement auf. Weiter wird eines der Kabelbündel zwischen zwei weiteren Kabelbündeln angeordnet, wobei das zwischen den zwei weiteren Kabelbündeln angeordnete Kabelbündel ein Schirmungs-Kabelbündel und die zwei weiteren Kabelbündel jeweils Rand-Kabelbündel bilden.

Weiter weist das Schirmungs-Kabelbündel ein EMV-Schirmungselement auf und einen Durchmesser, der größer ist als ein Durchmesser der Rand-Kabelbündel.

Weiter kann in ein oder mehrere Kabelbündel in zumindest einem Abschnitt des jeweiligen Kabelbündels zumindest ein Leerkabel in das entsprechende Kabelbündel hinzugefügt werden. Dies wurde vorhergehend erläutert. Weiter können Kabel verschiedener EMV-Kategorien in verschiedenen Kabelbündeln angeordnet werden, wobei ein Kabelbündel jeweils Kabel einer EMV-Kategorie umfasst.

Weiter können die Kabelbündel der Anordnung aufgerollt oder gefaltet werden, insbesondere um eine Montage/Installation in/an dem Installationsort zu vereinfachen. Insbesondere kann eine aufgerollte oder gefaltete Anordnung von Kabelbündeln in das Fahrzeug transportiert und dort entrollt oder entfaltet werden. Danach können die Kabelbündel in/an dem Fahrzeug befestigt werden.

Somit wird auch ein Verfahren zur Installation der Anordnung von Kabelbündeln, insbesondere in einem Fahrzeug, beschrieben. Hierbei wird eine Anordnung gemäß einer der in dieser Offenbarung erläuterten Ausführungsformen in/an dem gewünschten Installationsort, beispielsweise in dem Fahrzeug, beispielsweise in einem Deckenbereich oder in einem Unterbodenbereich, angeordnet. Hierbei kann die Anordnung entrollt oder entfaltet werden. Weiter können die Kabelbündel im/am Installationsort, z.B. im/am Fahrzeug, befestigt werden. Weiter kann ein EMV-Schirmelement eines Kabelbündels, insbesondere des Schirmungs-Kabelbündels, elektrisch mit einem Referenzpotential des Installationsorts, z.B. des Fahrzeugs, verbunden werden.

Hierdurch ergibt sich in vorteilhafter Weise eine einfache Verlegung eines Kabelbaums in einem Fahrzeug.

Die Erfindung wird anhand von Ausführungsbeispielen näher erläutert. Die Figuren zeigen:
- Fig. 1a: einen schematischen Querschnitt durch eine Anordnung von Kabelbündeln gemäß dem Stand der Technik,
- Fig. 1b: eine schematische Anordnung von Kabelbündeln gemäß dem Stand der Technik,
- Fig. 2: einen schematischen Querschnitt durch eine erfindungsgemäße Anordnung von Kabelbündeln,
- Fig. 3: einen schematischen Querschnitt durch eine erfindungsgemäße Anordnung von Kabelbündeln in einer weiteren Ausführungsform,
- Fig. 4: einen schematischen Querschnitt durch eine erfindungsgemäße Anordnung von Kabelbündeln in einer weiteren Ausführungsform,
- Fig. 5: eine schematische Draufsicht auf eine Anordnung von Kabelbündeln in einem Schienenfahrzeug und
- Fig. 6: ein schematisches Flussdiagramm eines erfindungsgemäßen Verfahrens.

Nachfolgend bezeichnen gleiche Bezugszeichen Elemente mit gleichen oder ähnlichen technischen Merkmalen.

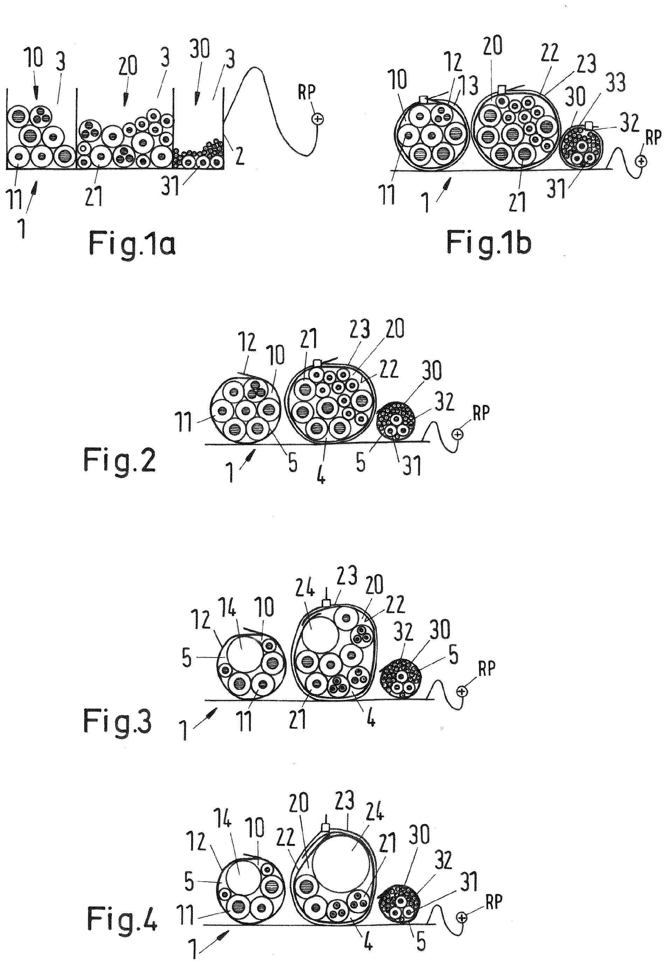

In Fig. 1a ist ein schematischer Querschnitt einer Anordnung 1 von Kabelbündeln 10, 20, 30 dargestellt. Die Kabel 11, 21, 31 der Kabelbündel 10, 20, 30 sind hierbei in einem Metallprofil 2 angeordnet, wobei das Metallprofil 2 drei Kabelkanäle 3 aufweist oder ausbildet. Hierbei ist jeweils ein Kabelbündel 10, 20, 30 in einem der Kabelkanäle 3 angeordnet. Ein Kabelbündel 10, 20, 30 umfasst hierbei mehrere Kabel 11, 21, 31, wobei der Übersichtlichkeit halber nur jeweils ein Kabel 11, 21, 31 jedes Kabelbündels 10, 20, 30 mit einem Bezugszeichen versehen ist. Hierbei bezeichnet ein Kabel 11 ein Kabel des ersten Kabelbündels 10, ein Kabel 21 ein Kabel eines zweiten Kabelbündels 20 und ein Kabel 31 ein Kabel eines dritten Kabelbündels 30.

Hierbei ist dargestellt, dass die Kabel 11, 21, 31 in verschiedenen Ausführungsformen Teil der Kabelbündel 10, 20, 30 sein können. Insbesondere können die Kabel 11, 21, 31 jeweils einen oder mehrere elektrische Leiter sowie einen Isolationsmantel umfassen. Weiter können Kabel 11, 21, 31 verschiedene Kabeldurchmesser aufweisen.

Weiter ist dargestellt, dass das Metallprofil 2 mit einem Referenzpotential RP elektrisch verbunden ist.

In Fig. 1a ist das zweite Kabelbündel 20 zwischen dem ersten Kabelbündel 10 und dem dritten Kabelbündel 30 angeordnet.

Fig. 1b zeigt einen schematischen Querschnitt durch eine weitere Anordnung von Kabelbündeln 10, 20, 30 gemäß dem Stand der Technik. Jedes Kabelbündel 10, 20, 30 umfasst hierbei mehrere Kabel 11, 21, 31, wobei der Übersichtlichkeit halber wieder nur eines der jeweiligen Kabel 11, 21, 31 mit einem Bezugszeichen versehen ist. Weiter weist jedes Kabelbündel 10, 20, 30 eine Kabelbündelhülle 12, 22, 32 auf, die die Kabel 11, 21, 31 umgibt. Weiter weist jedes Kabelbündel 10, 20, 30 ein Schirmgeflechtschlauch 13, 23, 33 auf, welches die jeweilige Hülle 12, 22, 32 und die in den Hüllen 12, 22, 32 angeordneten Kabel 11, 21, 31 umgibt. Die Schirmgeflechtschläuche 13, 23, 33 sind hierbei elektrisch mit einem Referenzpotential RP verbunden. Die Schirmgeflechtschläuche 13, 23, 33 dienen einer Schirmung der in den jeweiligen Schirmgeflechtschläuchen 13, 23, 33 angeordneten Kabel 11, 21, 31.

Fig. 2 zeigt einen schematischen Querschnitt durch eine erfindungsgemäße Anordnung 1 von drei Kabelbündeln 10, 20, 30, wobei die Kabelbündel 10, 20, 30 entsprechend der in Fig. 1b dargestellten Ausführungsform ausgeführt sind. Im Unterschied zu der in Fig. 1b dargestellten Ausführungsform weist nur ein Schirmungs-Kabelbündel 4 ein als Schirmgeflechtschlauch 23 ausgebildetes EMV-Schirmungselement auf. In dem in Fig. 2 dargestellten Ausführungsbeispiel bildet das zweite Kabelbündel 20 das Schirmungs-Kabelbündel 4. Das Schirmungs-Kabelbündel 4 ist zwischen zwei Rand-Kabelbündeln 5 angeordnet, die im in Fig. 2 dargestellten Ausführungsbeispiel von dem ersten Kabelbündel 10 und dem dritten Kabelbündel 30 gebildet werden.

Weiter dargestellt ist, dass ein Durchmesser des Schirmungs-Kabelbündels 4 größer ist als ein Durchmesser der beiden Rand-Kabelbündel 5, also größer als ein Durchmesser des ersten Kabelbündels 10 und als ein Durchmesser des dritten Kabelbündels 30.

Weiter dargestellt ist, dass der Schirmgeflechtschlauch 23 des Schirmungs-Kabelbündels 4 elektrisch mit dem Referenzpotential RP verbunden ist.

Das Schirmungs-Kabelbündel 4 ist zwischen den Rand-Kabelbündeln 5 angeordnet. Wie in Fig. 2 ersichtlich, kann dies bedeuten, dass jede gerade Verbindungslinie zwischen beliebigen Punkten der Rand-Kabelbündel 5 in der dargestellten Querschnittsebene sich durch das Schirmungs-Kabelbündel 4 erstreckt.

Es ist möglich, dass alle Kabelbündel 10, 20, 30 auf einer gemeinsamen, insbesondere ungekrümmten, ebenen Oberfläche angeordnet sind.

Durch den Schirmgeflechtschlauch 23 des Schirmungs-Kabelbündels 4 wird eine Ein- und Ausstrahlung von elektromagnetischen Wellen auf die/von den Kabel(n) 21 des Schirmungs-Kabelbündels 4 verhindert oder verringert. Ebenfalls wird eine Einstrahlung von elektromagnetischen Wellen, die von den Kabeln 11 des ersten Kabelbündels 10 erzeugt werden, auf die Kabel 31 des dritten Kabelbündels 30 und umgekehrt verhindert oder verringert.

Fig. 3 zeigt einen schematischen Querschnitt durch eine erfindungsgemäße Anordnung von Kabelbündeln 10, 20, 30 in einer weiteren Ausführungsform. Hierbei ist die Anordnung von Kabelbündeln 10, 20, 30 im Wesentlichen entsprechend der in Fig. 2 dargestellten Ausführungsform ausgebildet. Im Unterschied zu der in Fig. 2 dargestellten Ausführungsform umfasst sowohl das erste Kabelbündel 10 als auch das zweite Kabelbündel 20 jeweils ein Leerkabel 14, 24. Das Leerkabel 14 des ersten Kabelbündels 10 kann insbesondere zum nachträglichen Einbringen von weiteren Kabeln 11 in das erste Kabelbündel 10 dienen. Um zu gewährleisten, dass ein Durchmesser des von dem zweiten Kabelbündel 20 gebildeten Schirmungs-Kabelbündel 4 größer ist als der Durchmesser dieses ersten Kabelbündels 10, umfasst das zweite Kabelbündel 20 ebenfalls ein Leerkabel 24. Selbstverständlich kann auch dieses Leerkabel 24 dazu dienen, nachträglich weitere Kabel 21 in das zweite Kabelbündel 20 einzuführen.

In Fig. 4 ist ein schematischer Querschnitt durch eine weitere erfindungsgemäße Anordnung 1 von Kabelbündeln 10, 20, 30 dargestellt. Im Unterschied zu der in Fig. 3 dargestellten Ausführungsform ist ein Durchmesser des Leerkabels 24 des zweiten Kabelbündels 20 größer als ein Durchmesser des Leerkabels 14 des ersten Kabelbündels 10. Somit ist sichergestellt, dass auch in diesem Fall ein Durchmesser des von dem zweiten Kabelbündel 20 gebildeten Schirmungs-Kabelbündels 4 größer ist als der Durchmesser der Rand-Kabelbündel 5.

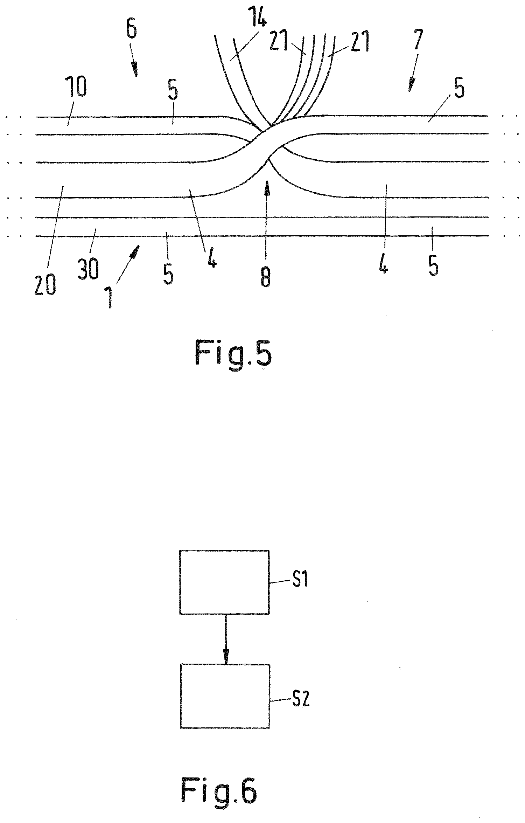

In Fig. 5 ist eine schematische Draufsicht auf eine erfindungsgemäße Anordnung 1 von Kabelbündeln 10, 20, 30 dargestellt. Insbesondere ist ein Verlauf der Kabelbündel 10, 20, 30 dargestellt. Weiter ist ersichtlich, dass in verschiedenen Abschnitten der Anordnung von Kabelbündeln 10, 20, 30 voneinander verschiedene Kabelbündel 10, 20, 30 das Schirmungs-Kabelbündel 4 ausbilden. In einem ersten Abschnitt 6 bildet das zweite Kabelbündel 20 das Schirmungs-Kabelbündel 4. In einem Kreuzungsabschnitt 8 kreuzen sich das erste Kabelbündel 10 und das zweite Kabelbündel 20. Entlang des Verlaufs auf den Kreuzungsabschnitt 8 folgend ist ein zweiter Abschnitt 7 der Anordnung angeordnet, in dem nunmehr das erste Kabelbündel 10 das Schirmungs-Kabelbündel 4 bildet. Weiter ist dargestellt, dass im Kreuzungsabschnitt 8 dem ersten Kabelbündel 10 ein Leerkabel 14 zugeführt wird, um dessen Durchmesser zu vergrößern. Weiter werden aus dem zweiten Kabelbündel Kabel 21 herausgeführt, wodurch sich ein Durchmesser des zweiten Kabelbündels 20 verringert.

In Fig. 6 ist ein schematisches Flussdiagramm eines erfindungsgemäßen Verfahrens dargestellt. In einem ersten Schritt S1 werden Kabelbündel 10, 20, 30 bereitgestellt, wobei mindestens eines der Kabelbündel 10, 20, 30, jedoch nicht alle Kabelbündel 10, 20, 30, mindestens ein EMV-Schirmelement aufweist, beispielsweise einen Schirmgeflechtschlauch 12, 22, 32. Weiter wird eines der Kabelbündel 10, 20, 30 zwischen zwei weiteren Kabelbündeln 10, 20, 30 in einem zweiten Verfahrensschritt S2 angeordnet. Hierbei bilden das zwischen den zwei weiteren Kabelbündeln 10, 20, 30 angeordnete Kabelbündel 10, 20, 30 ein Schirmungs-Kabelbündel 4 und die zwei weiteren Kabelbündel 10, 20, 30 jeweils Rand-Kabelbündel 5. Weiter weist das Schirmungs-Kabelbündel 4 ein EMV-Schirmungselement auf und einen Durchmesser, der größer ist als ein Durchmesser der Rand-Kabelbündel 5.

### Bezugszeichenliste

- 1: Anordnung
- 2: Metallprofil
- 3: Kabelkanal
- 4: Schirmungs-Kabelbündel
- 5: Rand-Kabelbündel
- 6: erster Abschnitt
- 7: zweiter Abschnitt
- 8: Kreuzungsabschnitt
- 10: erstes Kabelbündel
- 11: Kabel
- 12: Hülle
- 13: Schirmgeflechtschlauch
- 14: Leerkabel
- 20: zweites Kabelbündel
- 21: Kabel
- 22: Hülle
- 23: Schirmgeflechtschlauch
- 24: Leerkabel
- 30: drittes Kabelbündel
- 31: Kabel
- 32: Hülle
- 33: Schirmgeflechtschlauch
- RP: Referenzpotential
- S1: erster Schritt
- S2: zweiter Schritt

## Patentansprüche

1. Anordnung von Kabelbündeln (10, 20, 30), insbesondere für ein Schienenfahrzeug, wobei die Anordnung (1) ein erstes, ein zweites und mindestens ein weiteres Kabelbündel (10, 20, 30) umfasst, wobei in zumindest einem Teilabschnitt eines der Kabelbündel (10, 20) zwischen zwei weiteren Kabelbündeln (10, 20, 30) angeordnet ist,
**dadurch gekennzeichnet, dass**
in dem zumindest einen Teilabschnitt der Anordnung mindestens eines der Kabelbündel (10, 20), jedoch nicht alle Kabelbündel (10, 20, 30), mindestens ein EMV-Schirmelement aufweist, wobei das zwischen den zwei weiteren Kabelbündeln (10, 20, 30) angeordnete Kabelbündel (10, 20) ein Schirmungs-Kabelbündel (4) und die zwei weiteren Kabelbündel (10, 20, 30) jeweils ein Rand-Kabelbündel (5) bilden, wobei das Schirmungs-Kabelbündel (4) ein EMV-Schirmungselement aufweist und wobei ein Durchmesser des Schirmungs-Kabelbündels (4) größer ist als ein Durchmesser der Rand-Kabelbündel (5).

2. Anordnung nach Anspruch 1, **dadurch gekennzeichnet, dass** keines der Rand-Kabelbündel (5) ein EMV-Schirmungselement aufweist.

3. Anordnung nach einem der vorangegangenen Ansprüche, **dadurch gekennzeichnet, dass** ein EMV-Schirmungselement als Schirmgeflechtschlauch (13, 23, 33) ausgebildet ist.

4. Anordnung nach einem der vorangegangenen Ansprüche, **dadurch gekennzeichnet, dass** ein Kabelbündel (10, 20, 30) jeweils mindestens ein Kabel (11, 21, 31) einer vorbestimmten EMV-Kategorie umfasst, wobei verschiedene Kabelbündel (10, 20, 30) Kabel (11, 21, 31) verschiedener EMV-Kategorien umfassen.

5. Anordnung nach einem der vorangegangenen Ansprüche, **dadurch gekennzeichnet, dass** entlang eines Verlaufs der Anordnung (1) von Kabelbündeln (10, 20, 30) das Schirmungs-Kabelbündel (4) von verschiedenen Kabelbündeln (10, 20) gebildet wird.

6. Anordnung nach einem der vorangegangenen Ansprüche, **dadurch gekennzeichnet, dass** zumindest ein Abschnitt eines Kabelbündels (10, 20) zumindest ein Leerkabel (14, 24) zur Vergrößerung des Durchmessers des Kabelbündels (10, 20) umfasst.

7. Anordnung nach Anspruch 6, **dadurch gekennzeichnet, dass** zumindest ein Abschnitt des Schirmungs-Kabelbündels (4) mindestens ein Leerkabel (14, 24) umfasst, wobei eine Anzahl und/oder ein Durchmesser des/der Leerkabel (14, 24) derart gewählt wird, dass der Durchmesser des Schirmungs-Kabelbündels (4) größer ist als ein Durchmesser der Rand-Kabelbündel (5) ist.

8. Anordnung nach Anspruch 6 oder 7, **dadurch gekennzeichnet, dass** entlang eines Verlaufs eines Kabelbündels (10, 20) ein Leerkabel (14, 24) nur in einem Teilabschnitt des Kabelbündels (10, 20) angeordnet ist.

9. Fahrzeug, umfassend eine Anordnung nach einem der Ansprüche 1 bis 8.

10. Verfahren zur Herstellung einer Anordnung (1) gemäß einem der Ansprüche 1 bis 8, wobei ein erstes, ein zweites und mindestens ein weiteres Kabelbündel (10, 20, 30) bereitgestellt wird, wobei mindestens eines der Kabelbündel (10, 20), jedoch nicht alle Kabelbündel (10, 20, 30), mindestens ein EMV-Schirmelement aufweist, wobei eines der Kabelbündel (10, 20) zwischen zwei weiteren Kabelbündeln (10, 20, 30) angeordnet wird, wobei das zwischen den zwei weiteren Kabelbündeln (10, 20, 30) angeordnete Kabelbündel (10, 20) ein Schirmungs-Kabelbündel (4) und die zwei weiteren Kabelbündel (10, 20, 30) jeweils Rand-Kabelbündel (5) bilden, wobei das Schirmungs-Kabelbündel (4) ein EMV-Schirmungselement aufweist und wobei ein Durchmesser des Schirmungs-Kabelbündels (4) größer ist als ein Durchmesser der Rand-Kabelbündel (5) ist.

## Claims

1. Arrangement of cable bundles (10, 20, 30), in particular for a rail vehicle, the arrangement (1) comprising a first, a second, and at least one further cable bundle (10, 20, 30), one of the cable bundles (10, 20) being arranged between two further cable bundles (10, 20, 30) in at least one subsection,
**characterised in that**
in the at least one subsection of the arrangement, at least one of the cable bundles (10, 20), but not all of the cable bundles (10, 20, 30), has at least one EMC shielding element, the cable bundle (10, 20) arranged between the two further cable bundles (10, 20, 30) forming a shielding cable bundle (4) and the two further cable bundles (10, 20, 30) each forming an edge cable bundle (5), the shielding cable bundle (4) having an EMC shielding element, and a diameter of the shielding cable bundle (4) being larger than a diameter of the edge cable bundles (5).

2. Arrangement according to claim 1, **characterised in that** none of the edge cable bundles (5) has an EMC shielding element.

3. Arrangement according to one of the preceding claims, **characterised in that** an EMC shielding element is designed as a braided shielding sleeve (13, 23, 33).

4. Arrangement according to one of the preceding claims, **characterised in that** a cable bundle (10, 20, 30) in each case comprises at least one cable (11, 21, 31) of a predetermined EMC category, with different cable bundles (10, 20, 30) comprising cables (11, 21, 31) of different EMC categories.

5. Arrangement according to one of the preceding claims, **characterised in that**, along a course of the arrangement (1) of cable bundles (10, 20, 30), the shielding cable bundle (4) is provided by different cable bundles (10, 20).

6. Arrangement according to one of the preceding claims, **characterised in that** at least one section of a cable bundle (10, 20) comprises at least one empty cable (14, 24) for increasing the diameter of the cable bundle (10, 20).

7. Arrangement according to claim 6, **characterised in that** at least one section of the shielding cable bundle (4) comprises at least one empty cable (14, 24), a number and/or a diameter of the empty cable(s) (14, 24) being selected in such a way that the diameter of the shielding cable bundle (4) is greater than a diameter of the edge cable bundle (5).

8. Arrangement according to claim 6 or 7, **characterised in that**, along a course of a cable bundle (10, 20), an empty cable (14, 24) is arranged only in a subsection of the cable bundle (10, 20).

9. Vehicle comprising an arrangement according to one of claims 1 to 8.

10. Method for producing an arrangement (1) according to one of claims 1 to 8, wherein a first, a second, and at least one further cable bundle (10, 20, 30) is provided, wherein at least one of the cable bundles (10, 20), but not all cable bundles (10, 20, 30), has at least one EMC shielding element, wherein one of the cable bundles (10, 20) is arranged between two further cable bundles (10, 20, 30), wherein the cable bundle (10, 20) arranged between the two further cable bundles (10, 20, 30) forms a shielding cable bundle (4) and the two further cable bundles (10, 20, 30) each form an edge cable bundle (5), wherein the shielding cable bundle (4) has an EMC shielding element, and wherein a diameter of the shielding cable bundle (4) is larger than an outer diameter of the edge cable bundle (5).

## Revendications

1. Ensemble de faisceaux de câbles (10, 20, 30), en particulier pour un véhicule sur rails, dans lequel l'ensemble (1) comprend un premier, un deuxième et au moins un autre faisceau de câbles (10, 20, 30), dans lequel un des faisceaux de câbles (10, 20) est disposé entre deux autres faisceaux de câbles (10, 20, 30) dans au moins un tronçon partiel,
**caractérisé en ce que**
dans l'au moins un tronçon partiel de l'ensemble, au moins un des faisceaux de câbles (10, 20), non pas toutefois tous les faisceaux de câbles (10, 20, 30), présente au moins un élément de blindage CEM, dans lequel le faisceau de câbles (10, 20) disposé entre les deux autres faisceaux de câbles (10, 20, 30) forme un faisceau de câbles de blindage (4) et les deux autres faisceaux de câbles (10, 20, 30) forment respectivement un faisceau de câbles de bord (5), dans lequel le faisceau de câbles de blindage (4) présente un élément de blindage CEM et dans lequel un diamètre du faisceau de câbles de blindage (4) est plus grand qu'un diamètre des faisceaux de câbles de bord (5).

2. Ensemble selon la revendication 1, **caractérisé en ce qu'**aucun des faisceaux de câbles de bord (5) ne présente un élément de blindage CEM.

3. Ensemble selon l'une quelconque des revendications précédentes, **caractérisé en ce qu'**un élément de blindage CEM est réalisé en tant que tuyau en tresse de blindage (13, 23, 33).

4. Ensemble selon l'une quelconque des revendications précédentes, **caractérisé en ce qu'**un faisceau de câbles (10, 20, 30) comprend respectivement au moins un câble (11, 21, 31) d'une catégorie CEM prédéfinie, dans lequel différents faisceaux de câbles (10, 20, 30) comprennent des câbles (11, 21, 31) de différentes catégories CEM.

5. Ensemble selon l'une quelconque des revendications précédentes, **caractérisé en ce que** le faisceau de câbles de blindage (4) est formé par différents faisceaux de câbles (10, 20) le long d'une étendue de l'ensemble (1) de faisceaux de câbles (10, 20, 30).

6. Ensemble selon l'une quelconque des revendications précédentes, **caractérisé en ce qu'**au moins un tronçon d'un faisceau de câbles (10, 20) comprend au moins un câble vide (14, 24) pour agrandir le diamètre du faisceau de câbles (10, 20).

7. Ensemble selon la revendication 6, **caractérisé en ce qu'**au moins un tronçon du faisceau de câbles de blindage (4) comprend au moins un câble vide (14, 24), dans lequel un nombre et/ou un diamètre du/des câble(s) vide(s) (14, 24) sont choisis de telle manière que le diamètre du faisceau de câbles de blindage (4) est plus grand qu'un diamètre du faisceau de câbles de bord (5).

8. Ensemble selon la revendication 6 ou 7, **caractérisé en ce qu'**un câble vide (14, 24) est disposé seulement dans un tronçon partiel du faisceau de câbles (10, 20) le long d'une étendue d'un faisceau de câbles (10, 20).

9. Véhicule comprenant un ensemble selon l'une quelconque des revendications 1 à 8.

10. Procédé de fabrication d'un ensemble (1) selon l'une quelconque des revendications 1 à 8, dans lequel un premier, un deuxième et au moins un autre faisceau de câbles (10, 20, 30) sont fournis, dans lequel au moins un des faisceaux de câbles (10, 20), toutefois pas tous les faisceaux de câbles (10, 20, 30), présente au moins un élément de blindage CEM, dans lequel un des faisceaux de câbles (10, 20) est disposé entre deux autres faisceaux de câbles (10, 20, 30), dans lequel le faisceau de câbles (10, 20) disposé entre les deux autres faisceaux de câbles (10, 20, 30) forme un faisceau de câbles de blindage (4) et les deux autres faisceaux de câbles (10, 20, 30) forment respectivement des faisceaux de câbles de bord (5), dans lequel le faisceau de câbles de blindage (4) présente un élément de blindage CEM et dans lequel un diamètre du faisceau de câbles de blindage (4) est plus grand qu'un diamètre des faisceaux de câbles de bord (5).
